# NEUE EUROPÄISCHE PATENTSCHRIFT

(11) **EP 2 207 983 B2**
(45) Veröffentlichungstag und Bekanntmachung des Hinweises auf die Entscheidung über den Einspruch: **19.11.2014**
(45) Hinweis auf die Patenterteilung: 23.03.2011
(21) Anmeldenummer: 08804603.2
(22) Anmeldetag: 23.09.2008
(51) Int. Cl.: F16D 66/00

(54) **BREMSBACKE**
BRAKE SHOE
MÂCHOIRE DE FREIN

(30) Priorität: 10.10.2007 DE 102007048808; 11.07.2008 DE 102008032818
(43) Veröffentlichungstag der Anmeldung: 21.07.2010
(73) Patentinhaber: Continental Teves AG & Co. OHG, 60488 Frankfurt (DE)
(72) Erfinder: BAKKER, SVEN, 69469 Weinheim (DE); REUTER, Manfred, 35789 Weilmünster (DE); THIENEMANN, Henning, 10823 Berlin (DE)
(86) Internationale Anmeldenummer: PCT/EP2008/062686
(87) Internationale Veröffentlichungsnummer: WO 2009/050001

(56) Entgegenhaltungen:
- WO-A-2004/059248
- WO-A-2006/112784
- WO-A-2008/106924
- WO-A1-2006/040062
- DE-A1- 10 207 014
- US-A1- 2006 042 734
- US-A1- 2006 273 148

## Beschreibung

Die Erfindung betrifft eine Bremsbacke für ein Bremssystem nach dem Oberbegriff des Patentanspruchs 1.

Aus DE 40 21 568 A1 ist bereits eine Bremsbacke mit einer Reibbelagwarneinrichtung bekannt, die im Bereich des Reibbelags mehrere elektrische Leiterschleifen aufweist, die bei einem bestimmten Verschleißmaß, also ab einer definierten Restbelagstärke zerstört und unterbrochen werden. Die unterbrochenen Leiterschleifen können auf verschiedene Weise für eine Anzeige des Reibbelagverschleißes genutzt werden. Beispielsweise können die Kontaktstellen der Leiterschleifen von der Bremsscheibe frei geschliffen werden, wodurch sich ein elektrischer Massekontakt mit der Bremsscheibe ergibt, um den Stromkreis der Leiterschleife zu schließen.

Aus EP 0754 875 A1 ist bereits eine Bremsbacke der gattungsbildenden Art bekannt, mit mehreren Leiterschleifen für einen Verschleißanzeiger, die mit einem Steuergerät elektrisch verbunden sind. Das Steuergerät detektiert einen unterbrochenen oder ggf. geschlossenen Stromkreis, wenn die Leiterschleifen nicht mehr leiten oder ggf. leiten. Das daraus abgeleitete Signal wird dazu verwendet, Rückschlüsse über den Verschleißzustand des Reibbelags zu treffen, und diese ggf. an den Fahrer des Kraftfahrzeugs weiterzuleiten. Im Falle, dass mehrer Leiterschleifen sukzessive durch den fortschreitend verschleißenden Reibbelag unterbrochen oder signaltechnisch leitend werden, kann mit Hilfe von vorgesehenen Algorithmen eine relativ genaue Bestimmung des Verschleißzustandes des Bremsbelags vorgenommen werden.

Eine gattungsgemäße Bremsbacke geht z.B. aus WO-A-2006/1127 84 hervor. Es ist die Aufgabe der Erfindung, eine hinsichtlich der Erfassung des Verschleißzustandes verbesserte Bremsbacke sowie hierfür ein Bremsverschleiß-Überwachungssystem und ein Verfahren zum Betreiben eines Bremsenverschleiß-Überwachungssystem anzugeben, wobei ferner gute technische Voraussetzungen zur Identifikation einer Bremsbacke gegeben sein sollen.

Diese Aufgabe wird erfindungsgemäß für eine Bremsbacke der angegebenen Art mit den kennzeichnenden Merkmalen des Patentanspruchs 1 gelöst.

Ein passiver Transponder ist an dem Bremsbelag vorgesehen, der mittels einer drahtlosen Übertragungstechnik mittels RFID (Radio-Frequency-Identification)-Technik eine Signalverarbeitung ermöglicht.

Der Transponder weist in einer vorteilhaften Ausführungsform einen RFID-Mikrochip auf, der mit geringem Aufwand besonders platzsparend an der Rückenplatte der Bremsbacke oder auf dem mit der Rückenplatte verbundenen Dämpfungsblech unlösbar angebracht ist.

Auf dem RFID-Mikrochip ist bevorzugt ein für jeden Bremsbackentyp spezifizierter, nicht löschbarer Identifikations-Code gespeichert. Dies hat den Vorteil, dass die Bremsbacken im Handel/Versand/Vertrieb eindeutig identifizierbar sind, ohne dass ein optisches Verfahren zum Einsatz kommt. Hierdurch können verpackte Bremsbacken logistisch sehr einfach verfolgt werden, wobei die bisher auf der Rückenplatte aufgedruckten, aufgeklebten oder eingeprägten Identifikations-Chiffren (Produktnummer, o. ä.) nicht mehr erforderlich sind.

Durch die Verwendung eines passiven Transponders entfällt das Erfordernis zur Anordnung einer Batterie in der Nähe des am Bremsbacken fixierten Transponders, da mit Hilfe einer an der Fahrzeugkarosserie angeordneten Sende-Empfangs-Einheit und einer Antennenspule, vorzugsweise einer Flachspule im Transponder ein sich änderndes Hochfrequenzfeld induziert werden kann, das als elektrische Energiequelle und als Datenträger zur Verfügung steht, um die auf dem RFID-Mikrochip vorhandenen Daten der Sende-Empfangs-Einheit bereit zu stellen.

Die an der Fahrzeugkarosserie angeordnete Sende-Empfangs-Einheit steht mit einem Steuergerät in Verbindung, um den Transponder zu aktivieren und die Datensignale des Transponders, bevorzugt den Identifikations-Code des Bremsbackens und dessen Zustand empfangen und auswerten zu können. Die Identifikation des Bremsbackens mittels Transponder-Technologie hat somit den Vorteil, dass jederzeit die in der Fahrzeugbremsanlage eingebaute Bremsbacke präzise und auf unkomplizierte Weise identifiziert sowie auch bezüglich des Verschleißzustandes analysiert werden kann. Die hierfür erforderliche Anzeige kann in der Regel für den Fahrer gut erkennbar nach Wunsch oder Bedarf optisch als auch akustisch erfolgen.

Weitere Vorteile und Merkmale der Erfindung werden im Nachfolgenden anhand der Beschreibung mehrerer Ausführungsbeispiele erläutert.

Es zeigen:
- Figur 1: die Rückseite einer Bremsbacke, mit Blick auf einen Transponder, einen Spulenstromkreis und einer Verschleißpille,
- Figur 2: eine Seitenansicht der in Figur 1 abgebildeten Bremsbacke in Verbindung mit einer an einem Steuergerät angeschlossenen Sende-Empfangs-Einheit, die mittels drahtloser Datenübertragungstechnik mit dem Transponder kommuniziert,
- Figur 3: ein weiteres Ausführungsbeispiel mit Blick auf die Rückseite einer Bremsbacke, mit einem auf der Rückenplatte angeordneten Dämpfungsblech, das einen Transponder trägt,
- Figur 4: die Bremsbacke nach Figur 3 in einer Seitenansicht zur Verdeutlichung der in einer Verschleißpille
- Figur 5: ein Ausführungsbeispiel gemäß stand der Technick mit Blick auf den Reibbelag, in dem ein Transponder eingebettet ist.

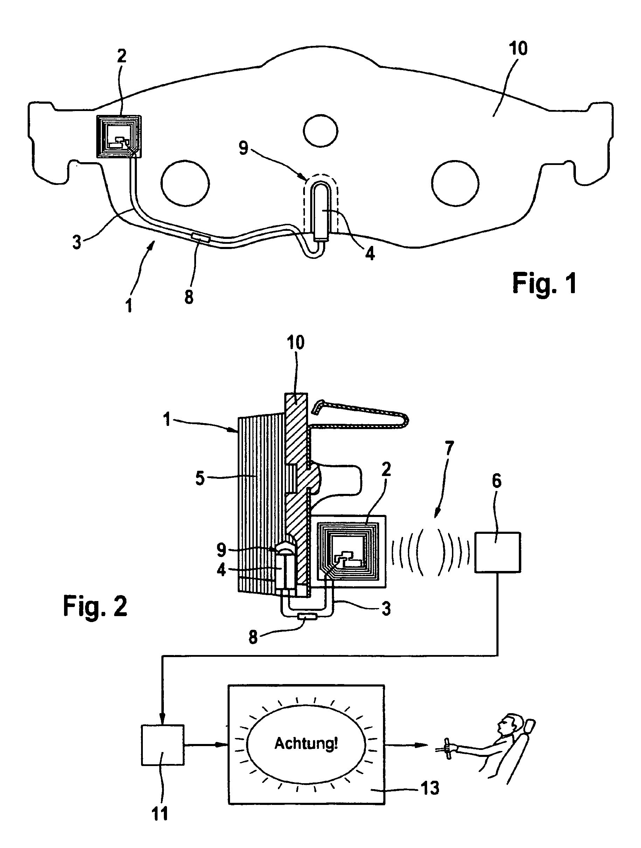

Aus der Figur 1 geht die Rückseite einer Bremsbacke 1 mit Blick auf einen Transponder 2, einen Spulenstromkreis 3 und einer Verschleißpille 9 hervor. An der Bremsbacke 1 ist der Transponder 2 unmittelbar auf der Rückenplatte 10 angebracht, dessen Spulenstromkreis 3 mit einer Leiterschleife 4 verbunden ist, die in einer Verschleißpille 9 eingefasst ist, welche sich abschnittsweise in den Bereich des mit der Rückenplatte 10 verbundenen Reibbelags 5 erstreckt. Ferner ist in dem Spulenstromkreis 3 ein hitzeempfindliches Sicherungsbauteil 8 integriert, welches derart ausgelegt ist, dass dieses ab einer gewissen Grenztemperatur zerstört wird. Somit kann bei einer thermischen Überbelastung des Bremsbackens 1 der Fahrer mittels einer geeigneten akustischen und/oder optischen Anzeige(siehe Anzeigevorrichtung 13 in Figur 2) gewarnt und zum Austausch des Bremsbacken-Satzes aufgefordert werden.

Die Figur 2 zeigt eine Seitenansicht der in Figur 1 abgebildeten Bremsbacke 1 in Verbindung mit einer an einem Steuergerät 11 angeschlossenen Sende-Empfangs-Einheit 6, die mittels drahtloser Datenübertragungstechnik mit dem Transponder 2 kommuniziert, um sowohl den Identifikations-Code, den Verschleiß- und/oder Überlastungszustand der Bremsbacke 1 abrufen und bewerten zu können. Auf mögliche Details der mit dem Steuergerät 11 verknüpften Anzeigevorrichtung 13 soll an dieser Stelle nicht eingegangen werden.

Ausgehend vom Ausführungsbeispiel nach Fig. 1, 2 gilt für die grundlegende Funktionsweise der Erfindung, dass ab einem bestimmten Verschleiß des Reibbelags 5 der Transponder 2 nicht mehr durch die Sende-Empfangs-Einheit 6 ausgelesen werden kann, da die Leiterschleife 4 des Spulenstromkreises 3 durch den Verschleiß des Reibbelags 5 zerstört wird. Somit kann das fehlende Signal 7 des Transponders 2 zur Verschleißbestimmung nach heutigem Vorbild verwendet werden, mit dem Unterschied, dass für die Verschleißanzeige keine Kabel- und Steckerverbindung zwischen Bremsbacke 1 und der Peripherie notwendig ist.

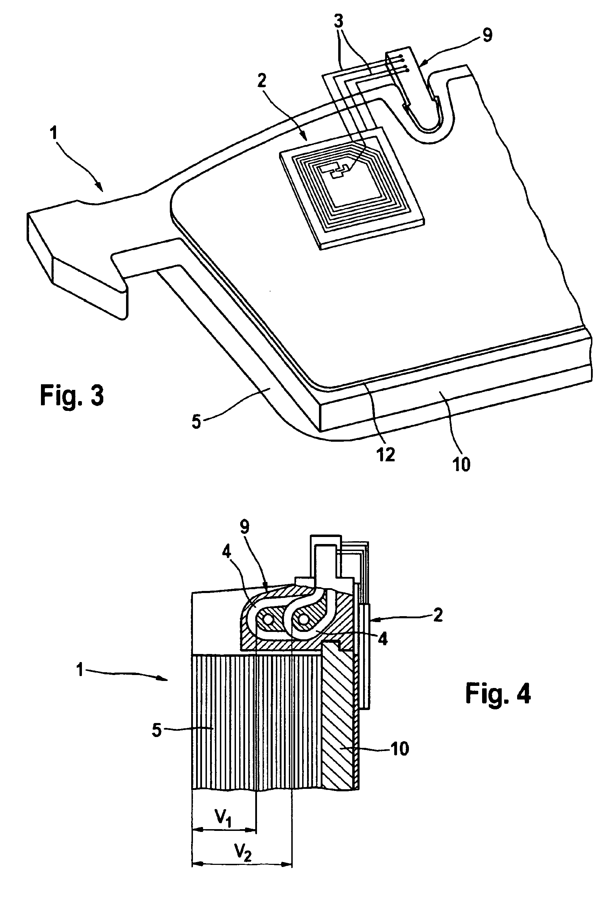

Die Figur 3 zeigt ein weiteres Ausführungsbeispiel der Erfindung mit Blick auf die Rückseite einer Bremsbacke 1, die auf der Rückenplatte 10 ein Dämpfungsblech 12 trägt, auf dem ein Transponder 2 fixiert ist. Die Anordnung des Transponders 2 auf dem Dämpfungsblech 12 ist zur Minimierung der thermischen Belastung des Transponders 2 vorteilhaft, wobei grundsätzlich bei Wunsch oder Bedarf weitere spezielle Isoliermittel zwischen dem Transponder 2 und der Bremsbacke 1 angeordnet werden können, um die Temperatureinwirkung auf den Transponder 2 gering zu halten.

Die Figur 4 zeigt die Bremsbacke 1 nach Figur 3 in einer Seitenansicht zur Verdeutlichung der in einer Verschleißpille angeordneten beiden Leiterschleifen 4, die in Reihe in der Verschleißpille 9 angeordnet sind. Infolge der Reihenanordnung werden die Leiterschleifen 4 mit fortschreitendem Verschleiß V₁,V₂ nacheinander unterbrochen, wodurch sich das Signal des Transponders 2 derart verändern, dass eine genauere Bestimmung des Reibbelagverschleißes möglich wird. Hierzu eignet sich bevorzugt die Anordnung von zwei auf der Bremsbacke 1 vorteilhaft miteinander integrierter Transponder 2, sodass jede Leiterschleife 4 separat mit einem der beiden Transponder 2 verbunden ist.

Obwohl in den bisherigen Ausführungsbeispielen nicht explizit ausgeführt ist, weist die Rückenplatte 10 bevorzugt eine Ausnehmung oder einen Vorsprung auf, um zur besseren Applikation des Transponders 2, insbesondere durch Anwendung der Klebetechnik eine günstige Fixierung zu gewährleisten. Alternativ lässt sich der Transponder 2 gemeinsam mit dem Dämpfungsblech 12 durch geeignete Umformmittel, vorzugsweise durch Nietung an der Rückenplatte 10 befestigen.

Ferner kann auch ein feuchteempfindliches Zusatzbauteil an dem RFID-Mikrochip des Transponders 2 vorgesehen sein, welches das Signal oder ein Teilsignal des Mikrochip unterbricht/verändert, sodass der die Bremsleistung mindernde Feuchtigkeitseinfluss sicher erfasst und ggf. durch geeignete Bremsenzusatzfunktionen (beispielsweise durch kurzzeitiges Anlegen der Bremsbacken an die Bremsscheibe zum Abwischen des Wasserfilms) vermindert werden kann.

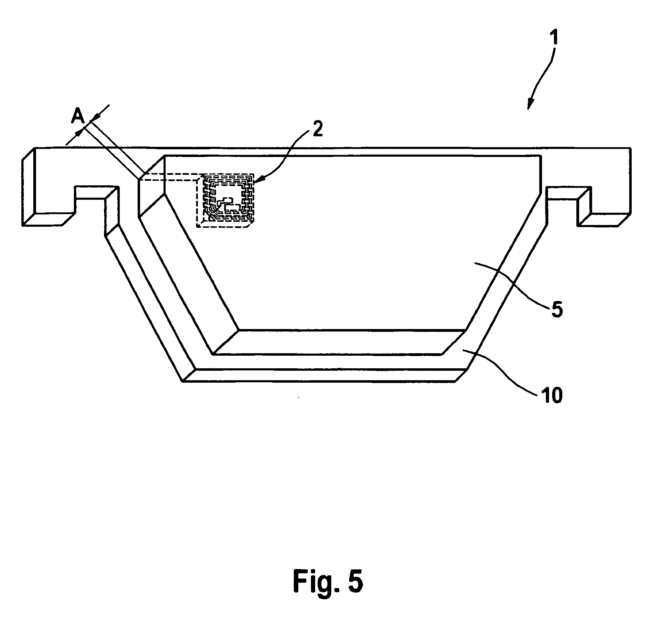

Figur 5 zeigt ein Beispiel gemäß dem Stand der Technik, wobei der Transponder 2 direkt im Reibbelag eingebettet ist. Der so im Reibmaterial eingelagerte und mit dem Reibbelag 5 verpresste Transponder 2 bedarf keiner Kabel- oder Kontaktführung mittels Leiterschleifen und

Verschleißpillen, sondern wird bei zunehmenden Reibbelagverschleiß einfach zerstört. Deshalb wird der Transponder 2 entfernt von der Rückenplatte 10 in einem Abstand A der minimal zulässigen Reibbelagstärke in dem Reibbelag 5 eingebettet, so dass beim Erreichen der minimalen Reibbelagstärke der Transponder 2 verschliffen wird, sein Signal verstummt und somit das Steuergerät 11 den verschlissenen Reibbelag 5 erfasst. Bei Wunsch oder Bedarf können zur Erfassung unterschiedlicher Reibbelagstärken auch mehrere Transponder 2 in unterschiedlichen Tiefen des Reibbelags 5 eingebettet werden, die sukzessive zerstört werden, wodurch der Verschleißzustand mittels des Steuergeräts 11 sukzessive zur Anzeige gebracht werden kann.

Die präzise Positionierung des Transponders 2 im Abstand A zur Rückenplatte 10 wird vorzugsweise dadurch erreicht, dass der Transponder 2 ein Distanzstück umfasst, welches eine Dicke im Bereich der minimalen Reibbelagstärke aufweist.

Um die für die Signalübertragung zwischen dem Transponder 2 und der Sende-Empfangs-Einheit 6 störende Abschirmwirkung des Reibbelags 5 möglichst gering zu halten, ist der Transponder 2 in einem Randbereich des Reibbelags 5 angeordnet. Auch kann der Transponder 2 mit einem Loch o. ä. versehen sein, so dass die Belagmasse den Transponder 2 durchgreift, wodurch der Zusammenhalt des Reibbelags 5 nur unwesentlich beeinträchtigt wird.

Grundsätzlich gilt für alle aus den Figuren 1-4 hervorgegangenen Ausführungsformen der Erfindung, dass mittels der Sende-Empfangs-Einheit 6 in definierten Zeitabständen ein Datenaustausch mit dem Transponder 2 erfolgt, der einen für die Bremsbacke 1 typ- und/oder verschleißspezifischen Identifikationscode umfasst, wobei mittels einer Auswerteschaltung ein Abgleich der durch die Sende-Empfangs-Einheit 6 empfangenen Transponderdaten mit den im Steuergerät 11 hinterlegten Soll-Daten erfolgt, sodass entweder bei einer Abweichung der empfangenen Transponderdaten von den Soll-Daten oder bei einem Ausfall des Datenaustauschs mittels der Anzeigevorrichtung 13 ein optisches und/oder akustisches Warnsignal initiiert werden kann.

Bei Wunsch oder Bedarf kann ferner abhängig vom Verschleißgrad des Transponders 2 und/oder mehrerer mit dem Transponder 2 verbundener Leiterschleifen 4 zur Verschleißprognose im Steuergerät 11 ein Verschleißmodell für die Bremsbacke 1 erstellt werden.

Die Signalübertragung zwischen Sende-Empfangs-Einheit 6 und Transponder 2 beinhaltet in jedem Fall einen Identifikations-Code, der Aufschluss über den im Bremssystem eingebauten Bremsbacken 1 sowie dessen Zustand gibt. Sind mehrer Leiterschleifen 4 mit einem oder mehreren Transpondern 2 verbunden oder alternativ mehrere Transponder 2 in verschiedenen Tiefen des Reibbelags 5 durch Reibbelagabnutzung eliminierbar eingebettet, so kann mittels des Steuergeräts 11 der weitere Verschleiß jeder Bremsbacke 1 recht genau prognostiziert werden.

Nach jedem Austausch eines Bremsbackensatzes erfolgt im Steuergerät 11 erneut eine Kalibrierung anhand der Identifikations-Codes der neuen Bremsbacken 1. Dieser individuelle Kalibriervorgang trägt dazu bei, dass im Straßenverkehr keine Störungen mit anderen Bremsenverschleiß-Überwachungssystemen gleicher Bauart auftreten.

### Bezugszeichenliste

- 1: Bremsbelag
- 2: Transponder
- 3: Spulenstromkreis
- 4: Leiterschleife
- 5: Reibmasse
- 6: Sende-Empfangs-Einheit
- 7: Empfangssignal
- 8: Sicherungsbauteil
- 9: Verschleißpille
- 10: Rückenplatte
- 11: Steuergerät
- 12: Dämpfungsblech
- 13: Anzeigevorrichtung

## Patentansprüche

1. Bremsbacke für ein Bremssystem, die eine Rückenplatte mit einem daran befestigten Reibbelag aufweist und mit einem im Bereich des Reibbelags angebrachten Mittel zur Erfassung des Reibbelag-Verschleißzustands, wobei zur Erfassung des am Reibbelag (5) vorliegenden Verschleißzustandes und/oder zur Identifizierung der Bremsbacke (1) ein passiver Transponder (2) vorgesehen ist, der mit einer drahtlosen Signalübertragungstechnik, mittels RFID(Radio-Frequency-Identification)-Technik versehen ist, **dadurch gekennzeichnet, dass** der Transponder (2) entweder an der Rückenplatte (10) oder an einem mit der Rückenplatte (10) verbindbaren Dämpfungsblech (12) unlösbar fixiert ist, und wobei entweder an der Rückenplatte (10) oder an einem mit der Rückenplatte (10) verbindbaren Dämpfungsblech (12) ein Spulenstromkreis (3) fixiert ist, der den Transponder (2) mit einer Verschleißpille (9) verbindet, die zumindest teilweise in den Reibbelag (5) reicht.

2. Bremsbacke nach Anspruch 1, **dadurch gekennzeichnet, dass** der Transponder (2) einen Mikrochip aufweist, auf dem für den Reibbelag (5) verschleißspezifische und/oder belagspezifische Parameter vorzugsweise mittels einer geeigneten Codierung gespeichert sind.

3. Bremsbacke nach Anspruch 1, **dadurch gekennzeichnet, dass** zur Erfassung der Reibbelagtemperatur in dem Spulenstromkreis (3) ein hitzeempfindliches Sicherungsbauteil (8) integriert ist.

4. Bremsbacke nach Anspruch 1, **dadurch gekennzeichnet, dass** das Mittel wenigstens eine elektrische Leiterschleife (4) aufweist, die mit dem Transponder (2) verbunden ist.

5. Bremsbacke nach Anspruch 4, **dadurch gekennzeichnet, dass** zur Erfassung eines Reibbelagverschleißes mittels eines für den Reibverschleiß charakteristischen Transpondersignals wenigstens in einer Verschleißpille (9) zwei Leiterschleifen (4) integriert sind, die mit fortschreitendem Verschleiß des Reibbelags (5) nacheinander durchtrennbar sind.

6. Bremsbacke nach Anspruch 1, **dadurch gekennzeichnet, dass** die Rückenplatte (10) eine Ausnehmung oder einen Vorsprung zur vorzugsweise stoffschlüssigen Aufnahme des Transponders (2) aufweist.

7. Bremsbacke nach Anspruch 1, **dadurch gekennzeichnet, dass** der Transponder (2) gemeinsam mit dem Dämpfungsblech (12) durch geeignete Umformmittel, bevorzugt durch eine Nietverbindung an der Rückenplatte (10) befestigt ist.

8. Bremsbacke nach Anspruch 1, **dadurch gekennzeichnet, dass** zur Erfassung der Feuchtigkeit am Reibbelag (5) der Transponder (2) mit einem feuchteempfindlichen Zusatzbauteil versehen ist, das ein für den Feuchtigkeitsgrad des Reibbelags (5) repräsentatives Transpondersignal erzeugt.

9. Bremsenverschleiß-Überwachungssystem mit einer Bremsbacke für ein Bremssystem nach einem der Ansprüche 1-8, **gekennzeichnet durch** eine Sende-Empfangs-Einheit (6), die entfernt von der Bremsbacke (1) mittels drahtloser Datenübertragungstechnik mit einem an der Bremsbacke (1) fixierten passiven Transponder (2) kommuniziert.

10. Bremsenverschleiß-Überwachungssystem nach Anspruch 9, **dadurch gekennzeichnet, dass** die Sende-Empfangs-Einheit (6) zur Auswertung der Transpondersignale und zur Kommunikation mit einer Anzeigevorrichtung (13) mit einem Steuergerät (11) verknüpft ist, das vorzugsweise Steuerungsaufgaben für einen für das Bremssystem vorgesehenen Bremsschlupfregler beinhaltet.

11. Verfahren zum Betreiben eines Bremsenverschleiß-Überwachungssystem nach Anspruch 9-10, **dadurch gekennzeichnet, dass** mittels der Sende-Empfangs-Einheit (6) in definierten Zeitabständen ein Datenaustausch mit dem Transponder (2) erfolgt, der einen für die Bremsbacke (1) typ- und/oder verschleißspezifischen Identifikationscode umfasst, dass mittels einer Auswerteschaltung ein Abgleich der durch die Sende-Empfangs-Einheit (6) empfangenen Transponderdaten mit im Steuergerät (11) hinterlegten Soll-Daten erfolgt, wobei entweder bei einer Abweichung der empfangenen Transponderdaten von den Soll-Daten oder bei einem Ausfall des Datenaustauschs mittels einer Anzeigevorrichtung (13) ein optisches und/oder akustisches Warnsignal initiiert wird.

12. Verfahren zum Betreiben eines Bremsenverschleiß-Überwachungssystem nach Anspruch 11, **dadurch gekennzeichnet, dass** abhängig vom Verschleißgrad des Transponders (2) und/oder mehrerer mit dem Transponder (2) verbundener Leiterschleifen (4) zur Verschleißprognose im Steuergerät (11) ein Verschleißmodell für die Bremsbacke (1) erstellt wird.

## Claims

1. Brake shoe for a brake system, which has a backplate with a friction lining attached thereto and with a means which is mounted in the region of the friction lining and has the purpose of sensing the state of the wear of the friction lining, where, in order to sense the state of wear of the friction lining (5) and/or in order to identify the brake shoe (1), a passive transponder (2) is provided which is equipped with a wireless signal transmission technology, using RFID (Radio Frequency Identification) technology, **characterized in that** the transponder (2) is non-detachably secured either to the backplate (10) or to a damping plate (12) which can be connected to the backplate (10), and wherein a coil circuit (3), which connects the transponder (2) to a wear pill (9) which extends at least partially into the brake lining (5), is secured either to the backplate (10) or to a damping plate (12) which can be connected to the backplate (10).

2. Brake shoe according to Claim 1, **characterized in that** the transponder (2) has a microchip on which wear-specific and/or lining-specific parameters for the friction lining (5) are stored, preferably using suitable coding.

3. Brake shoe according to Claim 1, **characterized in that**, in order to sense the temperature of the friction lining, a heat-sensitive securing component (8) is integrated into the coil circuit (3).

4. Brake shoe according to Claim 1, **characterized in that** the means has at least one electric conductor loop (4) which is connected to the transponder (2).

5. Brake shoe according to Claim 4, **characterized in that**, in order to sense the wear of a friction lining using a transponder signal which is characteristic of the friction wear, two conductor loops (4), which can be successively disconnected as the wear of the friction lining (5) progresses, are integrated at least into a wear pill (9).

6. Brake shoe according to Claim 1, **characterized in that** the backplate (10) has a recess or a projection for preferably accommodating the transponder (2) in a materially joined fashion.

7. Brake shoe according to Claim 1, **characterized in that** the transponder (2) is attached to the backplate (10) together with the damping plate (12) using suitable shaping means, preferably using a rivet connection.

8. Brake shoe according to Claim 1, **characterized in that**, in order to sense the moisture on the friction lining (5), the transponder (2) is provided with a moisture-sensitive additional component which generates a transponder signal which is representative of the degree of moisture of the friction lining (5).

9. Brake wear monitoring system having a brake shoe for a brake system according to one of Claims 1 - 8, **characterized by** a transceiver unit (6) which is remote from the brake shoe (1) and communicates by means of wireless data transmission technology with a passive transponder (2) which is secured to the brake shoe (1).

10. Brake wear monitoring system according to Claim 9, **characterized in that**, in order to evaluate the transponder signals and to communicate with a display device (13), the transceiver unit (6) is linked to a control device (11) which preferably contains control functions for a brake slip controller provided for the brake system.

11. Method for operating a brake wear monitoring system according to Claim 9 or 10, **characterized in that** data exchange with the transponder (2) is carried out by means of the transceiver unit (6) at defined time intervals, which transponder (2) comprises a type-specific and/or wear-specific identification code for the brake shoe (1), **in that** the transponder data which are received by the transceiver unit (6) are reconciled, by means of an evaluation circuit, with setpoint data which are stored in the control unit (11), where an optical and/or acoustic warning signal is initiated using a display device (13) either when the received transponder data deviate from the setpoint data or when the data exchange fails.

12. Method for operating a brake wear monitoring system according to Claim 11, **characterized in that** a wear model for the brake shoe (1) is produced as a function of the degree of the wear of the transponder (2) and/or of a plurality of conductor loops (4) which are connected to the transponder (2), in order to form wear predictions in the control unit (11).

## Revendications

1. Mâchoire de frein pour système de frein, qui présente une plaque de dos sur laquelle est fixée une garniture de frottement et des moyens de détection de l'état d'usure de la garniture de frottement installés au niveau de la garniture de frottement, un transpondeur passif (2) qui est doté d'une technique de transmission de signaux sans fil, au moyen d'une technique RFID ("Radio Frequency Identification" - identification à fréquence radio) étant prévue pour détecter l'état d'usure de la garniture de frottement (5) et/ou pour identifier la mâchoire de frein (1), **caractérisée en ce que** le transpondeur (2) est fixé de manière non libérable sur la plaque de dos (10) ou sur une tôle d'amortissement (12) qui peut être reliée à la plaque de dos (10) et un circuit (3) de courant de bobine qui relie le transpondeur (2) à une pastille d'usure (9) qui pénètre au moins en partie dans la garniture de frottement (5) étant fixé sur la plaque de dos (10) ou sur une tôle d'amortissement (12) qui peut être reliée à la plaque de dos (10).

2. Mâchoire de frein selon la revendication 1, **caractérisée en ce que** le transpondeur (2) présente une micropuce sur laquelle des paramètres spécifiques à l'usure de la garniture de frottement (5) et/ou spécifiques à la garniture sont conservés en mémoire, de préférence au moyen d'un codage approprié.

3. Mâchoire de frein selon la revendication 1, **caractérisée en ce qu'**un composant de sécurité (8) sensible à la chaleur est intégré dans le circuit (3) de courant de bobine pour détecter la température de la garniture de frottement.

4. Mâchoire de frein selon la revendication 1, **caractérisée en ce que** les moyens présentent au moins une boucle (4) conductrice de courant reliée au transpondeur (2).

5. Mâchoire de frein selon la revendication 4, **caractérisée en ce que** deux boucles conductrices (4) qui peuvent être découpées successivement lors de la progression de l'usure de la garniture de frottement (5) sont intégrées au moins dans une pastille d'usure (9) pour détecter l'usure de la garniture de frottement au moyen d'un signal de transpondeur caractéristique de l'usure par frottement.

6. Mâchoire de frein selon la revendication 1, **caractérisée en ce que** la plaque de dos (10) présente une découpe ou une saillie qui permet de loger le transpondeur (2) de préférence en correspondance de matière.

7. Mâchoire de frein selon la revendication 1, **caractérisée en ce que** le transpondeur (2) est fixé sur la plaque de dos (10) en même temps que la tôle d'amortissement (12) par des moyens appropriés de déformation, de préférence par une liaison rivetée.

8. Mâchoire de frein selon la revendication 1, **caractérisée en ce que** pour détecter l'humidité présente sur la garniture de frottement (5), le transpondeur (2) est doté d'un composant supplémentaire sensible à l'humidité qui forme un signal de transpondeur représentatif du degré d'humidité de la garniture de frottement (5).

9. Système de surveillance de l'usure des freins doté d'une mâchoire de frein pour système de frein selon l'une des revendications 1 à 8, **caractérisé par** une unité (6) d'émission et de réception disposée à distance de la mâchoire de frein (1) et qui communique par une technique de transmission de données sans fil avec un transpondeur passif (2) fixé sur la mâchoire de frein (1).

10. Système de surveillance de l'usure des freins selon la revendication 9, **caractérisé en ce que** l'unité (6) d'émission et de réception est associée à un appareil de commande (11) qui contient de préférence des tâches de commande pour un régulateur de patinage au freinage prévu pour le système de frein, pour évaluer les signaux du transpondeur et communiquer avec un dispositif d'affichage (13).

11. Procédé d'utilisation d'un système de surveillance de l'usure des freins selon la revendication 9 ou 10, **caractérisé en ce qu'**un échange de données avec le transpondeur (2) qui comprend un code d'identification spécifique du type et/ou de l'usure de la mâchoire de frein (1) a lieu à des intervalles de temps définis au moyen de l'unité (6) d'émission et de réception, **en ce qu'**une comparaison des données de transpondeur reçues par l'unité (6) d'émission et de réception avec des données de consigne conservées dans l'appareil de commande (11) a lieu au moyen d'un circuit d'évaluation et **en ce qu'**un signal visuel et/ou acoustique d'avertissement est délivré au moyen d'un dispositif d'affichage (13) en cas d'écart entre les données reçues du transpondeur et les données de consigne ou en cas de défaillance de l'échange de données.

12. Procédé d'utilisation d'un système de surveillance de l'usure des freins selon la revendication 11, **caractérisé en ce qu'**un modèle d'usure de la mâchoire de frein (1) est formé dans l'appareil de commande (11) pour pronostiquer l'usure en fonction du degré d'usure du transpondeur (2) et/ou de plusieurs boucles conductrices (4) reliées au transpondeur (2).
